(19) Europäisches Patentamt

European Patent Office

Office européen des brevets

(11) **EP 1 209 339 B1**

(12) **FASCICULE DE BREVET EUROPEEN**

(45) Date de publication et mention
de la délivrance du brevet:
**01.03.2006 Bulletin 2006/09**

(51) Int Cl.:
***F02D 13/02*** *(2006.01)*     ***F02D 41/02*** *(2006.01)*

(21) Numéro de dépôt: **01403005.0**

(22) Date de dépôt: **23.11.2001**

(54) **Procédé de gestion du fonctionnement d'un moteur à combustion interne multi-cylindres**

Verfahren zum Betreiben einer mehrzylindrigen Brennkraftmaschine

Method for operating a multi-cylinder internal combustion engine

(84) Etats contractants désignés:
**BE DE**

(30) Priorité: **27.11.2000 FR 0015254**

(43) Date de publication de la demande:
**29.05.2002 Bulletin 2002/22**

(73) Titulaire: **Renault s.a.s.**
**92100 Boulogne Billancourt (FR)**

(72) Inventeurs:
• **Batisson, Cathy**
**78220 Viroflay (FR)**
• **Croquet, Wouter**
**91150 Etampes (FR)**
• **Beurthey, Stéphan**
**91310 Leuville sur Orge (FR)**

(56) Documents cités:
**EP-A- 0 890 723**     **DE-A- 19 830 974**
**DE-A- 19 927 951**     **US-A- 5 661 971**

EP 1 209 339 B1

## Description

La présente invention concerne un procédé de gestion du fonctionnement d'un moteur à combustion interne multi-cylindres d'un véhicule équipé d'un pot d'échappement catalytique. Elle s'adresse particulièrement aux moteurs à allumage et injection électroniques et à soupapes commandées de façon non mécanique, c'est à dire à soupapes commandées par des moyens de commande d'ouverture et de fermeture autres que les classiques arbres à cames. De tels moyens sont connus, tels que des moyens de commande électromagnétiques, et permettent notamment d'agir de manière indépendante sur chaque soupape.

L'invention concerne plus précisément un procédé destiné à améliorer l'efficacité du pot catalytique, en raccourcissant le temps d'amorçage, c'est à dire l'intervalle de temps séparant le début des réactions chimiques développées dans le catalyseur du pot d'échappement et l'instant où on a atteint le taux maximum de conversion.

On sait qu'un pot catalytique traite les gaz d'échappement pour réduire les émissions de polluants par réaction chimique d'oxydoréduction. Les gaz sont traités dans l'ordre suivant : $H_2$, CO puis les hydrocarbures (HC)et les oxydes d'azote $NO_x$. Mais un tel pot catalytique ne fonctionne qu'à partir d'un certain niveau thermique. Dès qu'on a atteint la température d'amorçage, c'est à dire la température à partir de laquelle le premier polluant commence à être traité, des réactions exothermiques d'oxydation se déclenchent sur les composants les plus facilement oxydables, ce qui provoque une élévation de température, et l'efficacité du pot s'accroît. Pour chaque composant traité (CO, HC, $NO_x$), on évalue l'efficacité du pot en mesurant l'évolution, en fonction du temps, de son taux de conversion, c'est à dire le rapport, pour un composant donné : (masse à l'entrée du pot - masse en sortie) /masse à l'entrée. Ainsi, par exemple, si tout le CO en entrée est oxydé et donc absent en sortie, le taux de conversion, ou l'efficacité, pour le CO sera de 100%.

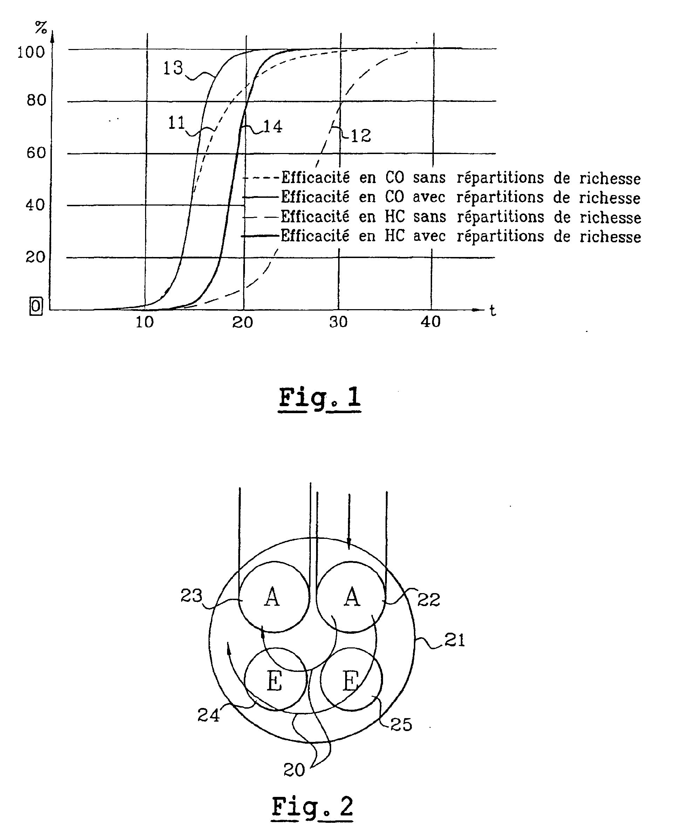

Ce phénomène est illustré sur la figure 1, qui montre en traits pointillés, courbe 11, l'efficacité en CO d'un pot de véhicule avec un moteur de type classique, et courbe 12, l'efficacité correspondante en HC. On notera le net décalage dans le temps, correspondant au temps d'amorçage pré-mentionné, entre le point de départ de ces courbes et le point d'arrivée au voisinage de 100% de conversion.

L'invention vise donc à améliorer l'efficacité du pot catalytique, en raccourcissant le dit temps d'amorçage. On connaît déjà différentes méthodes visant à un tel résultat.

Par exemple, il a été proposé d'alimenter le système d'échappement avec de l'air secondaire, injecté en amont du pot, pour y favoriser les réactions exothermiques d'oxydoréduction avec le CO produit par le moteur fonctionnant en mélange riche, et donc amener plus rapidement le pot à une température de fonctionnement optimale. Mais ceci nécessite l'ajout de moyens d'amenée de cet air secondaire, notamment une pompe, qui pénalise le rendement global du moteur en en augmentant le poids et en consommant de la puissance.

Une autre solution proposée consiste à se servir d'un des cylindres du moteur comme pompe d'apport supplémentaire d'air dans les gaz d'échappement, l'interruption de l'alimentation en carburant de ce cylindre étant réalisée temporairement, notamment pendant la période d'amorçage du pot catalytique, pour favoriser les réactions exothermiques dans le pot, et donc réduire la durée de sa montée en température. Mais ceci conduit à divers inconvénients, notamment à un refroidissement du cylindre servant de pompe à air et génération de contraintes thermiques dans la paroi du cylindre lors des changements de régime d'alimentation, ou encore à des variations de couple perceptibles en particulier à bas régime de rotation.

On connaît aussi par le document EP 0890723 un procédé de contrôle d'un moteur à combustion interne d'un véhicule automobile équipé d'un pot d'échappement catalytique et dont l'allumage et l'injection sont pilotés électroniquement. Ce procédé utilise un ensemble de stratégies de pilotage du fonctionnement du moteur, dont le séquencement est géré par un automate, et qui comprend plusieurs phases distinctes de mises en action, correspondant chacune à l'application ou à la désactivation de chaque stratégie, chaque phase étant par ailleurs comprise entre deux seuils de transition définis par deux valeurs prises par une variable représentative de l'énergie dégagée par la combustion du mélange air-carburant depuis le démarrage du moteur, et variant en fonction de la température d'eau du moteur mémorisée au démarrage. Parmi ces stratégies destinées à l'accélération de l'amorçage du pot catalytique, on trouve notamment une adaptation de l'avance à l'allumage, une action sur la richesse du mélange air-carburant, et en particulier l'application d'une répartition, selon une loi prédéfinie, des richesses entre les différents cylindres.

Par ailleurs, le document US 5661971 propose une méthode selon laquelle on joue sur une répartition adéquate des richesses dans les différents cylindres, et en sorte que le mélange gazeux issu de tous les cylindres, considéré globalement en sortie moteur ait une valeur de lambda voisine de un, c'est à dire que les composants des gaz d'échappement soient globalement sensiblement dans les proportions stoechiométriques. La méthode est utilisée dans un moteur avec arbre à cames, et consiste à faire fonctionner, au moins temporairement, au moins un des cylindres avec un mélange pauvre, les autres cylindres étant alimentés avec un mélange riche. Le ou les cylindres en mélange pauvre (appelés par la suite " cylindres pauvres ") produisent relativement plus d'$O_2$ oxydant, et ceux en mélange riche (appelés par la suite " cylindres riches ") produisent un excès de réducteurs, CO et $H_2$. Une augmentation de débit de ces trois composants en proportions stoechiométriques multiplie les réactions d'oxydo-réduction exothermiques dans le pot catalytique et fait donc monter sa température, comme indiqué ci-dessus.

Mais lorsque l'on diminue la richesse d'un moteur à injection indirecte essence, le moteur devient très vite instable. Par suite, la consigne de richesse dans les cylindres pauvres ne peut pas être trop faible (environ 0.9 au minimum), de sorte que la quantité d'$O_2$ envoyée à l'échappement reste limitée. Egalement, de manière similaire à l'inconvénient du procédé décrit auparavant, le couple délivré sur les cylindres pauvres étant plus faible, l'agrément de conduite peut s'en trouver dégradé. Le seul moyen dont on dispose alors pour rééquilibrer les couples des différents cylindres est de jouer sur l'avance à l'allumage des cylindres riches pour en modifier le rendement, mais cette stratégie n'est donc forcément pas optimale pour la consommation de carburant.

La présente invention a pour but de résoudre les problèmes évoqués ci-dessus et vise en particulier à fournir un procédé de gestion du comportement des différents cylindres de manière à augmenter simultanément d'une part le débit d'oxydant et de réducteurs en sortie moteur dans le dispositif d'échappement, et d'autre part le rendement propre du moteur.

Avec ces objectifs en vue, l'invention a pour objet un procédé de gestion du fonctionnement d'un moteur à combustion interne multi-cylindres d'un véhicule équipé d'un pot d'échappement catalytique, caractérisé en ce qu'il est appliqué à un moteur à allumage et injection électronique et à soupapes pouvant être commandées chacune de manière indépendante, et en ce qu'on commande l'ouverture et la fermeture de chacune des soupapes de manière à adapter pour chaque cylindre et chaque cycle les conditions de remplissage en air et d'évacuation des gaz, en fonction des autres paramètres de marche du moteur, pour que les gaz oxydants et réducteurs produits par l'ensemble des cylindres du moteur et envoyés sur le pot catalytique soient globalement dans des quantités et proportions prédéterminées.

Ainsi, grâce à l'utilisation de soupapes à commande individuelle, on peut maîtriser totalement et de manière spécifique pour chaque soupape les moments d'ouverture et de fermeture de chaque soupape, et donc la durée d'ouverture et la situation dans le temps, au cours d'un cycle moteur, de la période d'ouverture. Autrement dit, on peut appliquer à chaque cylindre une loi de distribution spécifique, définissant les moments d'ouverture et de fermeture des soupapes de ce cylindre, cette loi étant propre à un cylindre et concernant toutes les soupapes d'un même cylindre. Cette loi est modifiable dans le temps en fonction des autres paramètres caractérisant l'état du moteur ou son environnement, tels que par exemple sa température ou celle du pot d'échappement, la charge du moteur, etc. La loi de distribution de chaque cylindre peut être modifiée indépendamment des autres cylindres. La loi de chaque cylindre peut comporter des commandes agissant de manière différente sur les soupapes d'un même cylindre, dans le cas de cylindres comportant plusieurs soupapes d'admission ou d'échappement.

En conséquence, on peut à tout moment, et en particulier dans les phases de démarrage du moteur et d'échauffement du pot catalytique, adapter les débits d'$O_2$ et de CO produits par chaque cylindre, et donc par l'ensemble des cylindres, et donc raccourcir le temps d'amorçage du pot à catalyse en favorisant les réactions exothermiques d'oxydation sur le catalyseur.

La possibilité, ouverte par l'utilisation de soupapes à commande individuelle, d'adapter ponctuellement les flux gazeux entrant dans chaque cylindre permet ainsi, en combinaison avec les possibilités déjà connues de réglage indépendant de la quantité de carburant injectée pour chaque cylindre, de fournir en sortie de chaque cylindre un flux gazeux adapté en quantité et en nature, de manière que la combinaison de ces différents flux sortant des cylindres produise un mélange optimal pour le fonctionnement du pot catalytique, sans perturbation notable du couple moyen développé par le moteur ni disparité excessive du couple entre les différents cylindres.

Selon un mode de réalisation particulier de l'invention, on applique à au moins un des cylindres une loi de distribution spécifique générant une modification des écoulements gazeux dans le cylindre par rapport à une situation de fonctionnement de référence. Par exemple, on n'ouvre qu'une seule des soupapes d'admission d'un cylindre qui en comporte deux, ou on ouvre la ou les soupapes d'admission avec un fort retard, de manière à générer dans le cylindre des mouvements d'air particuliers propres à influer sur la combustion.

Une telle loi de distribution peut en particulier être appliquée pour le ou les cylindres alimentés en mélange pauvre lors d'une phase de fonctionnement du moteur en répartition de richesse, du type mentionnée précédemment. La modification de l'aérodynamique interne du cylindre résultant de la perturbation apportée par l'ouverture particulière des soupapes d'admission permet alors d'améliorer la combustion en mélange pauvre, ce qui permet d'augmenter relativement le débit d'oxydants issus du cylindre considéré, ce qui permet en conséquence d'augmenter la richesse sur les cylindres alimentés en mélange riche en conservant une proportion d'oxydants et de réducteurs dans les gaz d'échappements propre à un fonctionnement optimal du pot catalytique. Au bout du compte, on peut ainsi augmenter le débit d'oxydants et de réducteurs dirigés vers le catalyseur, et en conséquence favoriser sa montée en température et réduire son temps d'amorçage.

Selon une autre disposition, on utilise des lois de distribution différentes sur les cylindres riches et sur les cylindres pauvres, afin que la masse d'air introduite dans un cylindre pauvre soit supérieure à celle introduite sur un cylindre riche. On provoque ainsi de la répartition de richesse sur les différents cylindres en jouant non seulement sur le temps d'injection, ce qui permet de manière connue de déterminer une quantité de carburant injecté spécifique à chaque cylindre, mais aussi sur la quantité d'air introduite dans chaque cylindre.

Un tel mode de fonctionnement présente plusieurs avantages. On sait en effet que le couple délivré par un cylindre augmente, à richesse constante, lorsque la masse d'air introduite augmente et lorsque la richesse est proche de la richesse optimale, considérée du point de vue du rendement énergétique global, qui est d'environ 1 à 1,14 pour des moteurs à essence à injection indirecte. Ainsi, on peut rééquilibrer les couples des différents cylindres en combinant les effets de la richesse et du remplissage au lieu de le faire par une dégradation du rendement d'avance des cylindres riches, telle qu'utilisée dans les stratégies de répartition de richesse selon l'art antérieur, précédemment évoquées. On améliore donc la consommation.

On peut aussi, sur certains points de fonctionnement du moteur, en particulier à l'exclusion du ralenti, autoriser des écarts de couple entre les cylindres sans réellement pénaliser l'agrément de conduite. Ceci permet d'augmenter encore, relativement, la masse d'air introduite sur les cylindres pauvres et donc le débit d'oxydant et de réducteur arrivant sur le catalyseur, de manière similaire à ce qui a été expliqué ci-dessus pour le premier mode de réalisation.

Selon un troisième mode de réalisation, on applique à au moins un des cylindres, alimenté en mélange pauvre, une loi de distribution spécifique dans laquelle l'avance à l'ouverture à l'échappement est accrue, ce qui dégrade le rendement du dit cylindre pauvre, et conduit, pour respecter une consigne de couple, à devoir plus remplir le dit cylindre pauvre, par exemple en retardant relativement la fermeture à l'admission. Il est en effet, de manière générale, très difficile dégrader le rendement d'avance à l'allumage des cylindres pauvres car on génère très rapidement des instabilités de combustion. En revanche, sur un moteur à soupapes commandées de façon non mécanique, il est possible de dégrader le rendement des cylindres pauvres en jouant sur l'avance à l'ouverture d'échappement, comme indiqué ci-dessus. Le rendement ainsi dégradé du cylindre conduit donc, pour respecter la consigne de couple, à introduire plus d'air dans le cylindre, et donc à amener davantage d'oxygène sur le catalyseur, et finalement, comme dans les modes de réalisation précédents, à favoriser la montée en température du catalyseur.

D'autres caractéristiques et avantages apparaîtront dans la description qui va être faite de différentes stratégies, conformes à l'invention, pour le contrôle d'un moteur sans arbre à came, à soupapes commandées individuellement.

On se reportera aux dessins annexés dans lesquels :

- la figure 1 est un graphique montrant les courbes d'évolution de l'efficacité d'un pot catalytique en fonction du temps, pour le traitement de CO et HC,
- la figure 2 est une représentation schématique, en vue de dessus, de l'effet aérodynamique d'une procédure d'ouverture d'une seule des deux soupapes d'admission,
- les figures 3 à 7 sont des diagrammes de distribution illustrant les périodes d'ouverture et de fermeture des soupapes d'admission et d'échappement dans diverses configurations de fonctionnement qui seront expliquées par la suite,
- les graphiques des figures 8 à 12 illustrent différents paramètres de fonctionnement du moteur, de manière comparative entre des procédures de gestions de moteurs selon l'art antérieur et dans trois modes de réalisation selon l'invention.

Les courbes de la figure 1 correspondent respectivement au cas d'un fonctionnement du moteur sans répartition de richesse entre les cylindres (tracés 11 et 12) et au cas d'un fonctionnement avec répartition de richesse (tracés 13 et 14), une telle répartition de richesse ayant pour effet de favoriser les réactions d'oxydo-réduction sur le catalyseur et donc d'accélérer son échauffement, lui-même favorable à la complétude de ces réactions. On constate qu'une répartition de richesse permet d'accélérer notablement la montée en efficacité du pot catalytique, en particulier pour HC dont le traitement intervient à plus haute température que CO, et donc plus tardivement lors de la phase d'amorçage.

Le graphique de la figure 1 illustre donc clairement l'intérêt d'une procédure utilisée notamment au démarrage du moteur, telle que la répartition de richesse entre les cylindres, visant à réduire la phase d'amorçage du pot catalytique.

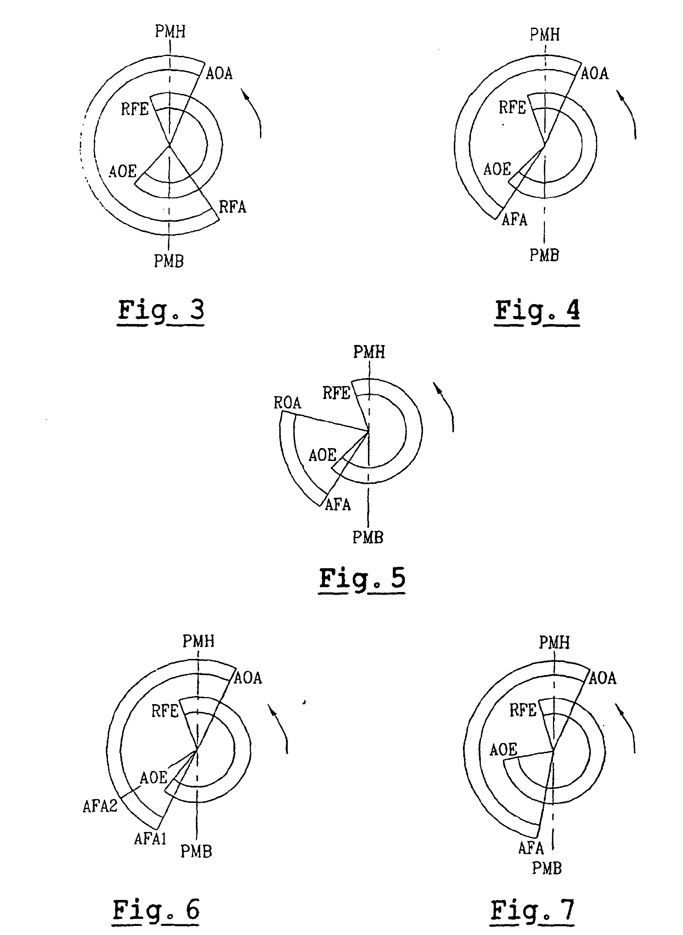

Dans tous les diagrammes des figures 3 à 7, le moteur est considéré tournant dans le sens de la flèche, PMH désignant le point mort haut et PMB le point mort bas.

La figure 3 montre le diagramme d'une distribution type d'un moteur à quatre temps à commande de soupapes mécanique, par arbre à came. La distribution se caractérise par de l'Avance à l'Ouverture Admission (AOA), du Retard à la Fermeture Admission (RFA), de l'Avance à l'Ouverture Echappement (AOE) et du Retard à la Fermeture Echappement (RFE).

La figure 4 montre la distribution d'un moteur à quatre temps à commande de soupapes non mécanique. L'Avance à la Fermeture Admission (AFA) est utilisée ici pour gérer la quantité d'air admise dans le cylindre.

Il est ici rappelé que dans un tel moteur le débit d'air entrant dans chaque cylindre est commandé par la durée d'ouverture de la ou des soupapes d'admission. La durée d'ouverture de chaque injecteur de carburant est par ailleurs déterminée par un calculateur en fonction, entre autres paramètres, de la quantité d'air estimée introduite dans le cylindre. Pour une quantité d'air donnée, la richesse de chaque cylindre est déterminée par la quantité de carburant injectée, donc par la durée d'ouverture des injecteurs. Une richesse de 1 correspond à un rapport entre la quantité de carburant et la quantité d'air dans des proportions stoechiométriques, conduisant théoriquement à une réaction complète de combustion.

La figure 5 illustre une application, conformément au premier mode de réalisation de l'invention, d'un fort Retard à l'Ouverture Admission (ROA) sur la distribution illustrée par la figure4. Le Retard à l'Ouverture Admission crée dans le cylindre une forte dépression lorsque le piston commence à descendre alors que toutes les soupapes sont fermées. Cette dépression provoque au moment de l'ouverture de la soupape d'admission une augmentation la vitesse d'écoulement du mélange et améliore ainsi, par le brassage du mélange air carburant qui en résulte dans le cylindre, les conditions initiales pour la combustion. On notera que, tout en conservant une quantité d'air introduite dans le cylindre sensiblement constante, on peut modifier de manière très sensible l'aérodynamique grâce au dit retard à l'ouverture admission.

Une autre possibilité, alternative ou complémentaire au fort Retard à l'Ouverture Admission, est illustrée par la figure 2, où l'on voit le mouvement tourbillonnant, représenté par les flèches courbes 20, de l'air introduit dans le cylindre 21 par la soupape d'admission 22, seule soupape ouverte alors que la seconde soupape d'admission 23 est maintenue fermée pendant cette phase du fonctionnement, les deux soupapes d'échappement 24, 25 étant bien sûr également fermées. Dans ce cas également, le fait d'ouvrir une seule soupape d'admission d'un cylindre conçu pour fonctionner normalement avec deux, crée une perturbation relative des écoulements, propre à améliorer la combustion, et ceci indépendamment de la quantité d'air introduite, que l'on souhaite garder sensiblement constante pour ne pas modifier le couple, la quelle quantité est essentiellement dépendante du moment ou on ferme l'admission.

La figure 6 illustre un exemple du deuxième mode de réalisation de l'invention, consistant à utiliser des lois de distribution différentes sur les cylindres riches et pauvres permettant de remplir plus les cylindres pauvres que les cylindres riches. Dans cet exemple, on applique une certaine Avance à la Fermeture Admission (AFA1) pour les cylindres pauvres, et une Avance à la Fermeture Admission plus importante (AFA2) pur les cylindres riches.

La figure 7 illustre le cas de la troisième variante de réalisation, où on dégrade volontairement le rendement d'un cylindre pauvre en provoquant une avance à l'ouverture échappement (AOE) particulièrement importante, et on compense l'effet de diminution du couple qui en résulterait par une augmentation du remplissage du cylindre, en réduisant par exemple l'avance à la fermeture admission AFA.

On va maintenant indiquer ci-dessous, à seul titre d'exemple d'une stratégie utilisable conformément à l'invention, une possibilité de déterminer les paramètres à imposer au moteur, pour respecter les conditions de fonctionnement suivantes :

- Un objectif de couple moyen, car la stratégie ne doit pas perturber le fonctionnement du moteur,
- Une disparité de couple cylindre à cylindre limitée,
- Un objectif de richesse vue par le catalyseur, pour optimiser son fonctionnement.

Pour limiter le nombre de variables envisageables, on a imposé les paramètres suivants en entrée :

- La richesse des cylindres pauvres : c'est le paramètre le plus influent sur le potentiel de la stratégie. Plus la richesse est faible, plus la stratégie est efficace. On a donc utilisé cette donnée comme donnée d'entrée pour se placer à la limite de ce que peut accepter le moteur.
- Les rendements d'avance à l'allumage des cylindres riches et pauvres, c'est à dire le rapport d'un couple obtenu avec une avance à l'allumage donnée par rapport au couple maximal qui peut être obtenu en fonction de l'avance à l'allumage.

On peut en déduire, par la suite de calculs ci-dessous, les grandeurs suivantes :

- La consigne de richesse des cylindres riches,
- Les consignes de remplissage des cylindres riches et pauvres, définissant les moments d'ouverture et fermeture des soupapes, lesquelles consignes aboutissant, lorsqu'elles sont différentes pour des cylindres différents, à des lois de distribution différentes d'un cylindre à un autre.

<u>Exemple de détermination de ces grandeurs</u>

1 - <u>Variables utilisées</u>

$C_{moyen}$ : Couple moyen
$R_{cata}$ : Richesse vue par le catalyseur
$\beta$ : Disparité de couple entre cylindres riches et pauvres
$N_1$ : Nombre de cylindres pauvres
$N_2$ : Nombre de cylindres riches

$C_1$ : Couple délivré par chaque cylindre pauvre
$C_2$ : Couple délivré par chaque cylindre riche
$\eta_{av1}$ : Rendement d'avance des cylindres pauvres
$\eta_{av2}$ : Rendement d'avance des cylindres riches
$R_1$ : Richesse de consigne des cylindres pauvres
$R_2$ : Richesse de consigne des cylindres riches
$\eta_{R1}$ : Rendement de richesse des cylindres pauvres
$\eta_{R2}$ : Rendement de richesse des cylindres riches
$M_1$ : Masse d'air introduite dans chaque cylindre pauvre
$M_2$ : Masse d'air introduite dans chaque cylindre riche
K : Constante

2 - <u>Equations de base</u>

$$C_{moyen} = f(C_1, C_2, N_1, N_2) \qquad (a)$$

$$\beta = (C_1 - C_2) / C_{moyen} \qquad (b)$$

$$C_1 = K \times \eta_{av1} \times \eta_{R1} \times M_1 \qquad (c)$$

avec

$$\eta_{R1} = f(R_1) \qquad (d)$$

$$C_2 = K \times \eta_{av2} \times \eta_{R2} \times M_2 \qquad (e)$$

avec

$$\eta_{R2} = f(R_2) \qquad (f)$$

$$R_{cata} = f(R_1, R_2, M_1, M_2, N_1, N_2) \qquad (g)$$

3 - <u>Résolution des équations</u>

On se place dans l'hypothèse d'un moteur à quatre cylindres, avec deux cylindres riches et deux cylindres pauvres. Supposons que l'on puisse exprimer le rendement de richesse sous forme d'un polynôme du second ordre :

$$\eta_R = a.R^2 + b.R + c$$

On a alors :

$$C_{moyen} = (C_1 + C_2) / 2 \qquad (a)$$

$$\beta = (C_1 - C_2) / C_{moyen} \qquad (b)$$

$$C1 = K \times \eta av1 \times \eta R1 \times M1 \qquad (c)$$

avec

$$\eta R1 = a. R_1^2 + b. R_1 + c \qquad (d)$$

$$C2 = K \times \eta av2 \times \eta R2 \times M2 \qquad (e)$$

avec

$$\eta R2 = a. R_2^2 + b. R_2 + c \qquad (f)$$

$$R_{cata} = (M_1 \times R_1 + M_2 \times R_2) / (M_1 + M_2) \qquad (g)$$

De (a) et (b) on déduit :

$$C_1 = C_{moyen} (1 + \beta/2) \quad (h)$$

et

$$C2 = Cmoyen (1 - \beta/2) \qquad (i)$$

De (h) et (c), on déduit $M_1$, masse d'air introduite dans chaque cylindre pauvre :

$$\Rightarrow \quad \underline{M_1 = C_{moyen} (1 + \beta/2) / (K \times \eta av1 \times \eta R_1)}$$

$$(h) \text{ et } (i) \Rightarrow \quad C_1 / C_2 = (1 + \beta/2) / (1 - \beta/2) \qquad (j)$$

$$(c) \text{ et } (e) \Leftrightarrow$$

$$C_1/C_2 = (\eta av1 \times \eta R_1)/\eta av2 \times M_1/M_2 \times 1/\eta R_2 \quad (k)$$

```
(j) et (k)  ⇔
```

$$M_1/M_2 = \eta av2 \times \eta R_2/(\eta av1 \times \eta R_1) \times (1+ \beta/2)/(1- \beta/2)$$

$$M_1/M_2 = \eta R_2 /\alpha \quad avec \quad \alpha = \frac{\eta av1}{\eta av2} \cdot \eta R1 \cdot \frac{1 - \beta/2}{1 + \beta/2} \quad (1)$$

et enfin de (l), (g) & (f) on tire :

$$\left[a.\left(Rcata - R_1\right)\right].R_2^2 + \left[b.\left(Rcata - R_1\right) - \alpha\right]R_2 + \left[c.\left(Rcata - R_1\right) + \alpha.Rcata\right] = 0$$

d'où on peut déduire la consigne de richesse des cylindres riches $R_2$.

L'équation (e) permet alors de connaître $M_2$, masse d'air à introduire dans les cylindres riches.

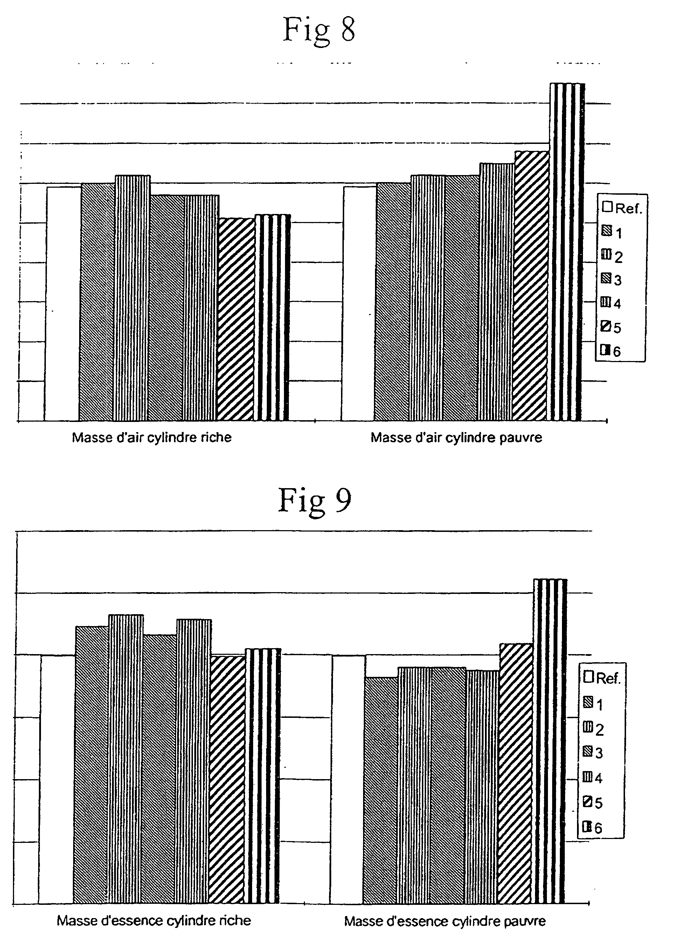

Les figures 8 à 12 permettent d'illustrer les résultats pouvant être obtenus par les diverses stratégies envisagées conformément à l'invention, comparativement à des stratégies de répartition de richesse appliquées à un moteur à arbre à came.

Dans chacune des figures 8 à 11, on a représenté sur la gauche les paramètres des cylindres riches, et sur la droite les paramètres correspondants des cylindres pauvres.

La figure 8 illustre la masse d'air introduite dans chaque cylindre.

La figure 9 illustre la masse d'essence introduite dans chaque cylindre.

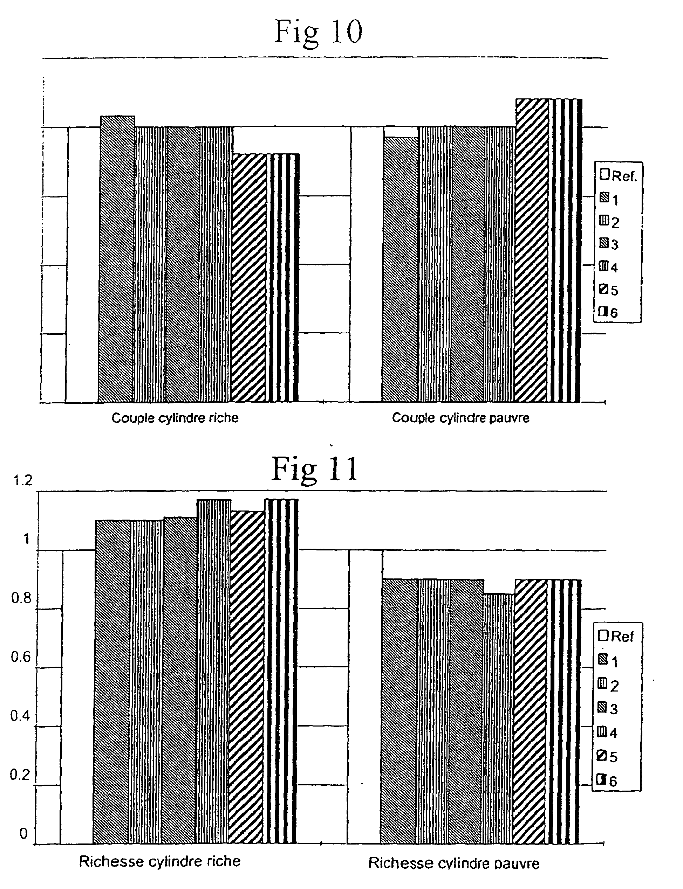

La figure 10 illustre le couple délivré par chaque cylindre.

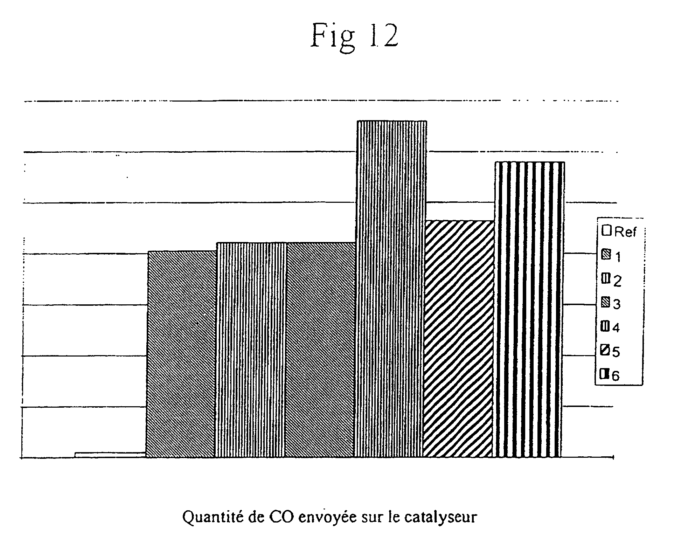

La figure 11 illustre les consignes de richesse pour chaque cylindre.

La figure 12 illustre la quantité de CO globale envoyée sur le catalyseur du pot d'échappement.

Dans chaque ensemble de barres :

- la première barre (Ref) à partir de la gauche correspond à un fonctionnement de référence d'un moteur avec arbre à came.

- la deuxième barre correspond à une configuration n°1, avec une stratégie de répartition de richesses sur un moteur avec arbre à came, obtenue par une adaptation à chaque cylindre de la durée d'injection.

- la troisième barre (2) correspond à une configuration n°2, également avec une stratégie de répartition de richesses sur un moteur avec arbre à came, mais avec cette fois une adaptation à chaque cylindre de la durée d'injection et une dégradation du rendement d'avance à l'allumage des cylindres riches pour obtenir un couple sensiblement identique sur les quatre cylindres.

- la quatrième barre correspond à une configuration n°3, dans le cas d'un moteur à soupapes commandées de manière indépendante, dans laquelle on impose les paramètres suivants en entrée :

- Même objectif de couple moyen que dans les configurations précédentes.
- Même objectif de richesse vue par le catalyseur.
- Même richesse des cylindres pauvres.
- Pas de dégradation des rendements d'avance des cylindres riches et pauvres.
- Pas de disparité de couple cylindre à cylindre.
- la cinquième barre correspond à une configuration n°4, reprenant les paramètres de la configuration 3 avec une diminution de la richesse de consigne des cylindres pauvres, et destinée à montrer clairement l'influence majeure de la consigne de richesse des cylindres pauvres.
- la sixième barre correspond à une configuration n°5, reprenant aussi les paramètres de la configuration 3, mais en s'autorisant une disparité limitée du couple entre cylindres riches et cylindres pauvres.
- la septième barre correspond à une configuration n°6, reprenant les paramètres de la configuration 5, mais en y ajoutant une dégradation du rendement des cylindres pauvres, au moyen d'une forte avance à l'ouverture échappement, selon le troisième mode de réalisation pré-mentionné, ce qui oblige à introduire encore plus d'air sur les cylindres pauvres pour respecter la consigne de couple moyen, comme cela a aussi déjà été indiqué.

Dans la configuration 1, comme on le voit figure 8, les masses d'air introduites sur les différents cylindres sont alors identiques ($M_1 = M_2 = M$), ce qui simplifie le système d'équations du départ.

$$C_{moyen} = (C_1 + C_2) / 2 \qquad (a)$$

$$b = (C_1 - C_2) / C_{moyen} \qquad (b)$$

$$C_1 = K \times \eta_{av1} \times \eta_{R1} \times M \qquad (c)$$

avec

$$\eta_{R1} = a. R_1^2 + b. R_1 + c \qquad (d)$$

$$C_2 = K \times \eta_{av2} \times \eta_{R2} \times M \qquad (e)$$

avec

$$\eta_{R2} = a. R_2^2 + b. R_2 + c \qquad (f)$$

$$R_{cata} = (R_1 + R_2) / 2 \qquad (g)$$

On impose $R_1$ et $R_2$ de manière à respecter la richesse moyenne $R_{cata}$ du mélange de gaz en sortie moteur vue par le catalyseur (équation (g)). On en déduit la masse d'air à introduire sur les différents cylindres pour respecter le couple moyen (équations (c) & (e)). Comme le rendement de richesse est dégradé, on est alors contraint d'augmenter légèrement le remplissage en air par rapport à la référence, comme on le voit figure 8. On constate, figure 10, que les couples des cylindres riches et pauvres sont différents.

Dans la configuration 2, la dégradation du rendement d'avance des cylindres riches conduit pour un couple correspondant au couple de référence, comme on le voit figure 10, à une augmentation des masses d'air et surtout d'essence, comme on le constate sur les figures 8 et 9 : la consommation du moteur est donc dégradée. Cependant, la quantité de CO augmente par rapport à la configuration précédente.

Dans la configuration 3, on a effectivement une annulation des disparités de couple, obtenue par des remplissages différents sur les cylindres riches et pauvres, conformément au deuxième mode de mise en oeuvre de l'invention. Dans cette configuration le débit de CO est strictement le même qu'en configuration 2, cependant les masses d'air et d'essence introduites sont plus faibles. Une telle stratégie améliore donc la consommation de carburant, pour un même débit de CO.

Dans la configuration 4, on constate, en réponse à une diminution de la richesse de consigne des cylindres pauvres, une augmentation importante du débit de CO (voir figure 12), ce qui montre que, en utilisant une loi de distribution spécifique permettant de diminuer la richesse des cylindres pauvres, on pourrait augmenter considérablement le potentiel de la stratégie.

Dans la configuration 5, on constate que, en autorisant une disparité de couple entre les cylindres au profit des cylindres pauvres, il en résulte une augmentation du débit de CO à l'échappement, par rapport à la configuration 3. Ceci peut s'expliquer par le fait qu'à une augmentation du couple des cylindres pauvres correspond une augmentation des masses d'air et d'essence introduites dans le cylindre, et une augmentation de $O_2$ en sortie. Comme une augmentation du couple des cylindres pauvres s'accompagne corrélativement d'une diminution du couple des cylindres riches, pour avoir un couple globalement constant, il en résulterait une diminution des masses d'air et d'essence des cylindres riches, à laquelle correspondrait une diminution non désirée de CO, ce que l'on compense à l'avance en augmentant la richesse des cylindres riches.

Dans la configuration 6, pour compenser la dégradation du rendement des cylindres pauvres générée par la forte avance à l'ouverture à l'échappement, on est amené à augmenter les quantités d'air et d'essence introduites dans les cylindres pauvres pour conserver le couple. L'augmentation de la quantité d'$O_2$ qui en résulte doit être compensée, pour respecter la richesse requise au niveau du catalyseur, par une augmentation de la quantité de CO, laquelle est obtenue par une augmentation de richesse des cylindres riches.

L'invention n'est pas limitée aux modes de réalisations et exemples qui ont été décrits. En particulier, on pourra dans une même stratégie globale de gestion du moteur combiner entre eux plusieurs des modes de réalisations mentionnés

## Revendications

1.    Procédé de gestion du fonctionnement d'un moteur à combustion interne multi-cylindres d'un véhicule équipé d'un pot d'échappement catalytique, **caractérisé en ce qu'**il est appliqué à un moteur à allumage et injection électronique et à soupapes pouvant être commandées chacune de manière indépendante, et **en ce qu'**on commande l'ouverture et la fermeture de chacune des soupapes de manière à adapter pour chaque cylindre et chaque cycle les conditions de remplissage en air et d'évacuation des gaz, en fonction des autres paramètres de marche du moteur, pour que les gaz oxydants et réducteurs produits par l'ensemble des cylindres du moteur et envoyés sur le pot catalytique soient globalement dans des quantités et proportions prédéterminées.

2.    Procédé selon la revendication 1, **caractérisé en ce qu'**on applique à chaque cylindre une loi de distribution spécifique, définissant les moments d'ouverture et de fermeture des soupapes de ce cylindre, cette loi étant propre à un cylindre et concernant toutes les soupapes d'un même cylindre.

3.    Procédé selon la revendication 2, **caractérisé en ce que** la loi de distribution est modifiable dans le temps en fonction d'autres paramètres caractérisant l'état du moteur ou son environnement.

4.    Procédé selon la revendication 2, **caractérisé en ce que** la loi de distribution de chaque cylindre est modifiée indépendamment des autres cylindres.

5.    Procédé selon la revendication 2, **caractérisé en ce qu'**on applique à au moins un des cylindres une loi de distribution spécifique générant une modification des écoulements gazeux dans le cylindre par rapport à une situation de fonctionnement de référence.

6.    Procédé selon la revendication 5, **caractérisé en ce que** la loi de distribution de chaque cylindre comporte des commandes agissant de manière différente sur les soupapes d'admission d'un même cylindre, dans le cas de cylindres comportant plusieurs soupapes d'admission.

7.    Procédé selon la revendication 6, **caractérisé en ce qu'**on n'ouvre qu'une seule des soupapes d'admission d'un cylindre qui en comporte deux.

8.    Procédé selon la revendication 5, **caractérisé en ce qu'**on ouvre la ou les soupapes d'admission avec un fort retard.

9.    Procédé selon la revendication 5, **caractérisé en ce qu'**on applique la dite loi de distribution spécifique pour un ou des cylindres alimentés en mélange pauvre lors d'une phase de fonctionnement du moteur en répartition de richesse entre les différents cylindres.

10.    Procédé selon la revendication 2, **caractérisé en ce qu'**on utilise des lois de distribution différentes sur les cylindres riches et sur les cylindres pauvres, afin que la masse d'air introduite dans un cylindre pauvre soit supérieure à celle introduite sur un cylindre riche.

11.    Procédé selon la revendication 2, **caractérisé en ce qu'**on applique à au moins un des cylindres, alimenté en mélange pauvre, une loi de distribution spécifique dans laquelle l'avance à l'ouverture à l'échappement est accrue.

12. Procédé selon la revendication 11, **caractérisé en ce que**, pour respecter une consigne de couple, on retarde relativement la fermeture à l'admission, pour plus remplir d'air le dit cylindre pauvre.

## Claims

1. A method of managing the operation of an multi-cylinder internal combustion engine fitted with a catalytic exhaust converter, **characterised in that** it is applied to an engine with electronic ignition and injection and with valves which may each be controlled independently, and **in that** the opening and closure of each of the valves is controlled so as to adapt, for each cylinder and each cycle, the air filling and gas removal conditions as a function of other engine operating parameters, so that the oxidising and reducing gases generated by all the engine cylinders and supplied to the catalytic converter are, overall, in predetermined quantities and proportions.

2. A method as claimed in claim 1, **characterised in that** a specific distribution law, defining the instants of opening and closure of the valves of the cylinder, is applied to each cylinder, this law being specific to a cylinder and concerning all the valves of the same cylinder.

3. A method as claimed in claim 2, **characterised in that** the distribution law may be modified in time as a function of other parameters characterising the state of the engine or its environment.

4. A method as claimed in claim 2, **characterised in that** the distribution law of each cylinder is modified independently from the other cylinders.

5. A method as claimed in claim 2, **characterised in that** a specific distribution law generating a modification of the gas flows in the cylinder with respect to a reference operating situation is applied to at least one of the cylinders.

6. A method as claimed in claim 5, **characterised in that** the distribution law of each cylinder comprises commands acting in a different way on the intake valves of the same cylinder, in the case of cylinders comprising a plurality of intake valves.

7. A method as claimed in claim 6, **characterised in that** only one of the intake valves of a cylinder comprising two valves is opened.

8. A method as claimed in claim 5, **characterised in that** the intake valve or valves are opened with a substantial delay.

9. A method as claimed in claim 5, **characterised in that** the specific distribution law is applied with respect to one or more cylinders supplied with lean mixture during an operating stage of the engine distributing richness between the various cylinders.

10. A method as claimed in claim 2, **characterised in that** different distribution laws are used for rich cylinders and for lean cylinders, so that the mass of air introduced into a lean cylinder is greater than that introduced into a rich cylinder.

11. A method as claimed in claim 2, **characterised in that** a specific distribution law, in which the exhaust opening advance is increased, is applied to at least one of the cylinders supplied with lean mixture.

12. A method as claimed in claim 11, **characterised in that**, in order to respect a torque reference, the intake closure is delayed in a relative manner in order to fill the lean cylinder with more air.

## Patentansprüche

1. Verfahren zur Verwaltung des Betriebs eines Mehrzylinder-Verbrennungsmotors eines Fahrzeugs, das mit einem katalytischen Auspufftopf ausgestattet ist, **dadurch gekennzeichnet, dass** es auf einen Motor mit elektronischer Zündung und Einspritzung angewendet wird, und auf Ventile, von denen jedes unabhängig gesteuert werden kann, und **dadurch**, dass die Öffnung und das Schließen eines jeden Ventils so gesteuert wird, dass für jeden Zylinder und jeden Zyklus die Bedingungen der Befüllung mit Luft und der Gasentleerung angepasst werden, in Abhängigkeit von den anderen Betriebsparametern des Motors, damit die oxidierenden und reduzierenden Gase, die von der Gesamtheit der Zylinder des Motors produziert und zum katalytischen Topf geschickt werden, im Allgemeinen innerhalb vorbestimmter Mengen und Verhältnisse sind.

2. Verfahren gemäß Anspruch 1, **dadurch gekennzeichnet, dass** auf jeden Zylinder ein spezifisches Verteilungsgesetz angewendet wird, das die Zeitpunkte der Öffnung und des Schließens der Zylinderventile definiert, wobei dieses Gesetz für einen Zylinder eigen ist und alle Ventile eines selben Zylinders betrifft.

3. Verfahren gemäß Anspruch 2, **dadurch gekennzeichnet, dass** das Verteilungsgesetz in der Zeit modifizierbar ist, in Abhängigkeit von anderen Parametern, die den Zustand des Motors oder seiner Umgebung kennzeichnen.

4. Verfahren gemäß Anspruch 2, **dadurch gekennzeichnet, dass** das Verteilungsgesetz eines jeden Zylinders unabhängig von den anderen Zylindern modifizierbar ist.

5. Verfahren gemäß Anspruch 2, **dadurch gekennzeichnet, dass** auf mindestens einen Zylinder ein spezifisches Verteilungsgesetz angewendet wird, das eine Modifikation des Abströmens der Gase im Zylinder im Verhältnis zu einer Referenz-Betriebssituation hervorruft.

6. Verfahren gemäß Anspruch 5, **dadurch gekennzeichnet, dass** das Verteilungsgesetz eines jeden Zylinders Anweisungen enthält, die auf die Einlassventile eines selben Zylinders auf verschiedene Weise einwirken, im Fall von Zylindern mit mehreren Einlassventilen.

7. Verfahren gemäß Anspruch 6, **dadurch gekennzeichnet, dass** man nur eines der Einlassventile eines Zylinders öffnet, der davon zwei aufweist.

8. Verfahren gemäß Anspruch 5, **dadurch gekennzeichnet, dass** das oder die Einlassventile mit einer starken Verzögerung geöffnet werden.

9. Verfahren gemäß Anspruch 5, **dadurch gekennzeichnet, dass** das spezifische Verteilungsgesetz für einen oder mehrere Zylinder angewendet wird, die mit Magergemisch versorgt werden, in einer Motor-Betriebsphase der Verteilung des Gehalts unter den verschiedenen Zylindern.

10. Verfahren gemäß Anspruch 2, **dadurch gekennzeichnet, dass** man verschiedene Verteilungsgesetze auf die fetten und auf die mageren Zylinder anwendet, damit die in einen mageren Zylinder eingeführte Luftmenge größer als diejenige ist, die in einen fetten Zylinder eingeführt wird.

11. Verfahren gemäß Anspruch 2, **dadurch gekennzeichnet, dass** auf mindestens einen Zylinder, der mit magerem Gemisch versorgt wird, ein spezifisches Verteilungsgesetz angewandt wird, in dem die vorzeitige Auslassöffnung gesteigert ist.

12. Verfahren gemäß Anspruch 11, **dadurch gekennzeichnet, dass**, um eine Drehmoment-Voreinstellung zu respektieren, das Schließen des Einlasses relativ verzögert wird, um den mageren Zylinder stärker mit Luft zu befüllen.

Fig. 1

Fig. 2

Fig. 3

Fig. 4

Fig. 5

Fig. 6

Fig. 7

## Fig 8

Masse d'air cylindre riche          Masse d'air cylindre pauvre

Légende: Ref., 1, 2, 3, 4, 5, 6

## Fig 9

Masse d'essence cylindre riche          Masse d'essence cylindre pauvre

Légende: Ref., 1, 2, 3, 4, 5, 6

## Fig 10

Couple cylindre riche          Couple cylindre pauvre

Ref.
1
2
3
4
5
6

## Fig 11

1.2

1

0.8

0.6

0.4

0.2

0

Richesse cylindre riche          Richesse cylindre pauvre

Ref
1
2
3
4
5
6

# Fig 12

Quantité de CO envoyée sur le catalyseur